# FASCICULE DE BREVET EUROPEEN

(11) **EP 2 836 432 B1**
(45) Date de publication et mention de la délivrance du brevet: **16.03.2016**
(21) Numéro de dépôt: 13719999.8
(22) Date de dépôt: 12.04.2013
(51) Int. Cl.: B64G 1/00, B64G 1/40, F02K 9/97

(54) **ETAGE DE LANCEUR COMPRENANT UNE STRUCTURE DE SUPPORT TEMPORAIRE DE TRONÇONS DE TUYERE, PERMETTANT L'ACCES AU CORPS DU MOTEUR**
RAKETENSTUFE MIT EINER TEMPORÄREN STÜTZSTRUKTUR FÜR TEILE DER DÜSE, UM ZUGRIFF ZUM MOTOR ZU ERMÖGLICHEN
LAUNCHER STAGE COMPRISING A TEMPORARY SUPPORT STRUCTURE FOR PARTS OF THE NOZZLE, ALLOWING ACCESS TO THE ENGINE

(30) Priorité: 13.04.2012 FR 1253431
(43) Date de publication de la demande: 18.02.2015
(73) Titulaire: Snecma, 75015 Paris (FR)
(72) Inventeur: CONDAMINET, Olivier, F-77550 Moissy Cramayel Cedex (FR); LECOMPTE, Guy, F-77550 Moissy Cramayel Cedex (FR); MATURA, Philippe, F-77550 Moissy Cramayel Cedex (FR)
(74) Mandataire: Brevalex
(86) Numéro de dépôt international: PCT/FR2013/050796
(87) Numéro de publication internationale: WO 2013/153340

(56) Documents cités:
- WO-A1-2010/112766
- FR-A1- 2 622 931

## Description

### DOMAINE TECHNIQUE

La présente invention se rapporte au domaine des lanceurs spatiaux.

Plus précisément, l'invention concerne un lanceur spatial comprenant un étage principal relié à un étage supérieur dont la tuyère d'éjection est déployable.

### ÉTAT DE LA TECHNIQUE ANTÉRIEURE

Sur un lanceur du type Ariane 5, il est prévu plusieurs systèmes de propulsion. Il s'agit d'abord des deux propulseurs à poudre latéraux, utilisés pour l'étape de décollage, et qui produisent près de 90% de la poussée. Après le détachement de ces propulseurs à poudre pour alléger le lanceur, le moteur de l'étage principal du lanceur prend le relais pour quitter l'atmosphère terrestre. Après épuisement de ses réservoirs, l'étage principal se sépare de l'étage supérieur, dont le moteur assure la poursuite de la propulsion, jusqu'à la mise en orbite de la charge utile.

L'étage supérieur comporte habituellement un réservoir en dessous duquel est fixé un corps de moteur, lui-même prolongé vers le bas par une tuyère d'éjection. Cette tuyère, également dénommée « divergent », crée de la poussée en éjectant de la vapeur d'eau à grande vitesse, produite par la combustion d'hydrogène et d'oxygène liquides.

La tuyère est donc l'élément de l'étage supérieur qui accélère les gaz en sortie de la chambre de combustion. Dans le vide, plus le divergent est long, et plus la poussée produite par les gaz éjectés est grande. C'est la raison pour laquelle il est prévu une tuyère aussi longue que possible. Néanmoins, plus la tuyère est longue, plus son encombrement est important. Cela se traduit par une augmentation de la masse globale du lanceur, qui va à l'encontre du principe habituel visant à son allègement, de manière à pouvoir augmenter la masse de la charge utile transportée.

Pour résoudre ce problème, il a été proposé une tuyère déployable, pourvue de trois tronçons de tuyère déplaçables les uns par rapport aux autres selon la direction axiale de la tuyère. Ainsi, ces tronçons sont capables d'être amenés d'une configuration de lancement dite « reployée » dans laquelle les deux tronçons les plus bas sont relevés, à une configuration déployée de propulsion dans laquelle ces mêmes tronçons se situent dans la continuité les uns des autres, pour former une tuyère de longueur maximale, cf. FR 2 622 931.

Par conséquent, sur le pas de tir, avant le lancement, l'étage supérieur du lanceur est assemblé sur l'étage principal avec sa tuyère en configuration de lancement, dans laquelle ses tronçons sont en partie rétractés. Si cela permet de diminuer la longueur de l'étage supérieur, et donc de réduire la masse globale de cet étage et celle de l'ensemble du lanceur, le maintien en position haute de certains des tronçons conduit à interdire/compliquer l'accès au corps du moteur entouré par ces mêmes tronçons.

Pourtant, après l'installation de l'étage supérieur sur l'étage principal, certaines opérations doivent être effectuées sur le corps principal du moteur de l'étage supérieur, avant le lancement.

Il s'agit par exemple d'opérations nominales, comme par exemple les inspections finales, mais il peut également s'agir d'opérations non-nominales, comme le remplacement de composants défectueux.

Quoiqu'il en soit, chaque opération nécessite d'intervenir sur les tronçons de tuyère maintenus initialement en position haute, de manière à les amener d'abord en position basse pour découvrir le corps du moteur sur lequel des opérateurs doivent intervenir, puis à remonter ces tronçons afin de ré-amener la tuyère dans sa configuration de lancement.

Les manipulations de ces tronçons de tuyère conduisent à un alourdissement conséquent du cycle de mise en oeuvre du lanceur avant son tir, et engendrent des risques de dégradation de ces tronçons, surtout lorsqu'ils sont réalisés en matériau composite.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un étage de lanceur spatial comprenant, en position verticale, un corps de moteur, un réservoir fixé au-dessus du corps de moteur ainsi qu'un premier tronçon de tuyère déployable fixé au-dessous du corps de moteur, ladite tuyère déployable comprenant également un second tronçon porté par une structure permettant son déploiement, ainsi qu'un troisième tronçon, lesdits premier, second et troisième tronçons de tuyère étant destinés à se situer dans le prolongement les uns des autres lorsque la tuyère se trouve en configuration déployée de propulsion, avec le second tronçon se situant dans le prolongement du premier tronçon, et le troisième tronçon se situant dans le prolongement du second tronçon qui le porte.

Selon l'invention, ledit étage comporte en outre une structure de support temporaire de tronçon de tuyère montée sur ledit réservoir, permettant d'amener la tuyère dans une configuration d'accès au corps du moteur dans laquelle le premier tronçon pénètre au moins partiellement dans le second tronçon, et dans laquelle le second tronçon pénètre au moins partiellement dans le troisième tronçon dont l'extrémité inférieure est en appui contre un support inférieur de ladite structure de support temporaire.

L'invention est remarquable en ce que l'adjonction de la structure de support temporaire, assimilable à un berceau, offre une solution simple et satisfaisante permettant d'amener et de maintenir la tuyère dans une configuration autorisant l'accès au corps du moteur, pour pouvoir y réaliser les interventions requises avant lancement, sur le pas de tir. Ces interventions peuvent ainsi être effectuées de façon très fiable.

Cette configuration autorisant l'accès au corps du moteur peut même être adoptée en sortie de fabrication de l'étage, et pendant le transport de l'étage sur le pas de tir. Dans ces conditions, après l'assemblage des différents étages sur le pas de tir, les opérateurs intervenant sur le corps du moteur n'ont aucune opération préalable à réaliser sur les tronçons de tuyère pour pouvoir avoir accès à ce corps.

De plus, l'invention confère une bonne tenue mécanique à la tuyère dans sa configuration autorisant l'accès au corps du moteur, grâce en particulier à l'appui de son troisième tronçon sur le support inférieur de la structure de support temporaire. Cet avantage est notamment bénéfique durant la phase de transport du lanceur vers son pas de tir, car cela réduit considérablement les risques d'endommagements des tronçons de tuyère.

Enfin, la structure de support temporaire peut servir de passerelle d'accès aux opérateurs pour réaliser les interventions sur le corps du moteur. Ils peuvent donc l'utiliser pour y marcher et/ou s'y sécuriser, ce qui réduit les risques d'accident.

De préférence, dans ladite configuration d'accès au corps du moteur, l'extrémité inférieure dudit second tronçon de tuyère est également en appui contre ledit support inférieur de la structure de support temporaire, même si cela pourrait en être autrement, sans sortir du cadre de l'invention. L'avantage d'une telle spécificité réside dans le renforcement de la tenue mécanique de la tuyère, grâce à l'appui des deux tronçons sur le support inférieur de la structure de support temporaire. Alternativement, donc, le second tronçon de tuyère pourrait ne pas être en appui sur ce support, mais simplement porté par la structure précitée, permettant son déploiement.

De préférence, dans ladite configuration d'accès au corps du moteur, l'extrémité supérieure de chacun des second et troisième tronçons de tuyère se situe au niveau ou au-dessous de l'extrémité supérieure du premier tronçon raccordée au corps de moteur. Il en découle une très grande accessibilité au corps de moteur pour y effectuer les interventions requises.

De préférence, ladite structure de support temporaire comporte des tirants reliant le support inférieur au réservoir. Grâce à ces tirants, la masse globale de la structure de support temporaire peut rester faible, et présenter un encombrement raisonnable. L'espace entre ces tirants peut facilement être adapté pour permettre un accès aisé aux opérateurs qui doivent intervenir sur le corps du moteur. De plus, les tirants peuvent être utilisés par les opérateurs pour se sécuriser, manuellement et/ou à l'aide de harnais de sécurité.

De préférence, ledit support inférieur prend la forme d'une couronne, de préférence conçue de sorte que les opérateurs puissent marcher dessus.

De préférence, ladite structure de support temporaire comporte également un support supérieur situé au-dessus de l'extrémité supérieure de chacun des second et troisième tronçons de la tuyère en configuration d'accès au corps du moteur. Ici aussi, ce support supérieur est de préférence conçu de sorte que les opérateurs puissent marcher dessus, pendant qu'ils réalisent les interventions sur le corps du moteur.

Il permet également de limiter le mouvement des second et troisième tronçons dans la direction verticale vers le haut, ce qui est bénéfique pour le transport durant lequel ces tronçons de tuyère sont préférentiellement maintenus axialement et/ou radialement par la structure de support temporaire.

Le support supérieur permet enfin de limiter les chocs sur les tronçons situés en dessous de lui, comme par exemple les chocs provenant d'une chute d'outil.

De préférence, ladite structure de support temporaire comporte également une armature de liaison entre les supports supérieur et inférieur, cette armature étant disposée autour du troisième tronçon.

Cette armature permet de protéger les tronçons, notamment vis-à-vis des chocs. Elle peut également être utilisée, tout comme les supports inférieur et supérieur, pour maintenir les tronçons durant la phase de transport.

Enfin, ladite structure de support temporaire comporte préférentiellement également au moins un élément parmi un escalier d'accès et un compartiment de stockage d'outils.

L'invention a également pour objet un lanceur spatial comprenant au moins un étage tel que celui décrit ci-dessus, cet étage formant alors préférentiellement un étage supérieur destiné à être assemblé sur un étage principal de lanceur.

L'invention a enfin pour objet un procédé de fabrication d'un lanceur spatial comprenant un étage principal ainsi qu'un étage supérieur tel que décrit ci-dessus, ledit procédé comprenant les étapes suivantes :
- réalisation de l'étage supérieur, en amenant la tuyère dans la configuration d'accès au corps du moteur ;
- transport dudit étage supérieur sur un pas de tir, avec la tuyère en configuration d'accès au corps du moteur ; et
- sur le pas de tir, montage de l'étage supérieur sur l'étage principal, avec la tuyère en configuration d'accès au corps du moteur.

Dans ces conditions, après l'assemblage des différents étages sur le pas de tir, les opérateurs intervenant sur le corps de moteur n'ont aucune opération préalable à réaliser sur les tronçons de tuyère pour pouvoir avoir accès au corps de moteur, et y réaliser les interventions nécessaires. Bien entendu, préférentiellement, la configuration d'accès au corps du moteur est conservée pendant toute la phase durant laquelle des interventions sont requises / possibles.

De préférence, il est ensuite réalisé, avant le lancement, les étapes suivantes :
- la mise en place de la tuyère dans une configuration de lancement dans laquelle le second tronçon est disposé autour du corps de moteur, et porte à son extrémité basse ledit troisième tronçon ; puis
- le retrait de la structure de support temporaire.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de face d'une partie d'un étage de lanceur selon un mode de réalisation préféré de la présente invention, avec sa tuyère en configuration de lancement ;
- la figure 1a représente une vue en perspective de la partie d'étage de lanceur montrée sur la figure précédente ;
- la figure 2 représente une vue similaire à celle de la figure 1, avec la tuyère en configuration déployée de propulsion ;
- les figures 3 et 4 représentent deux vues en perspective, selon des angles différents, de la partie d'étage de lanceur montrée sur les figures précédentes, avec sa tuyère en configuration d'accès au corps du moteur de cette ; et
- la figure 5 représente une vue en perspective d'une partie d'un lanceur comprenant l'étage montré sur les figures précédentes.

### EXPOSÉ DÉTAILLÉ DE MODES DE RÉALISATION PARTICULIERS

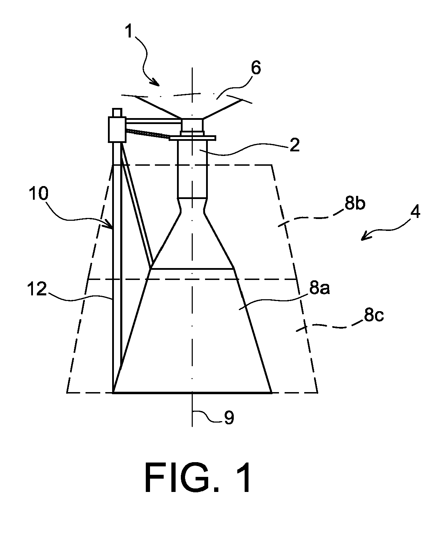

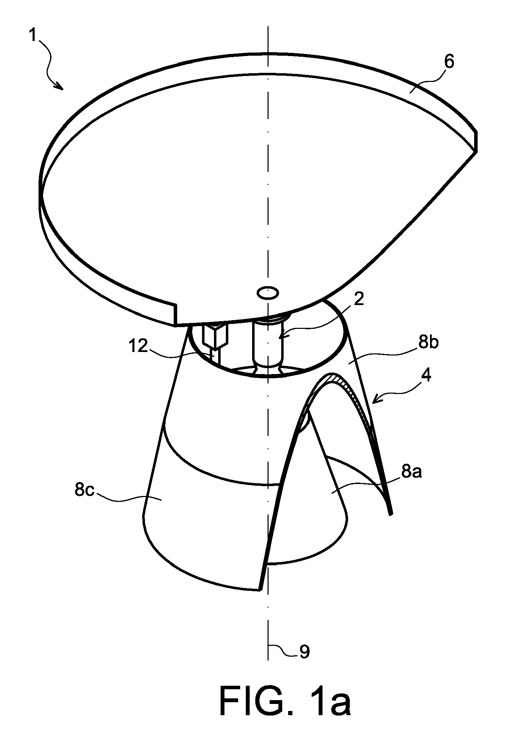

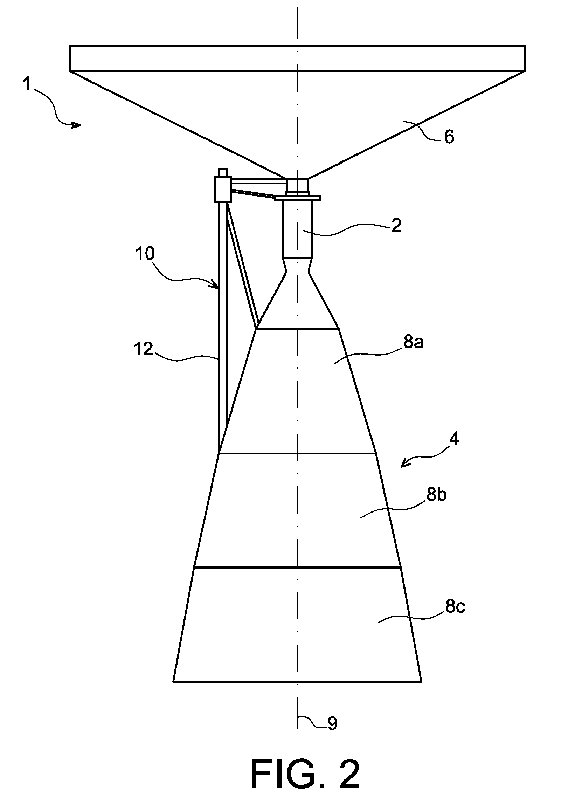

En référence aux figures 1, 1a et 2, il est représenté une partie d'étage supérieur de lanceur spatial selon un mode de réalisation préféré de la présente invention, le lanceur étant du type Ariane 5.

L'étage de lanceur 1, représenté en position verticale, comprend un corps de moteur 2 incluant notamment une chambre de combustion dans laquelle se produit la réaction entre l'hydrogène et l'oxygène liquides, produisant de la vapeur d'eau qui s'éjecte à grande vitesse par une tuyère 4 située au-dessous du corps de moteur 2.

L'hydrogène et l'oxygène sont contenus dans un réservoir 6 agencé au-dessus du corps de moteur 2, la jonction mécanique entre ces deux éléments s'effectuant à l'aide d'un fond de réservoir de forme conique, comme visible sur les figures 1, 1a et 2. La charge utile destinée à être transportée par le lanceur est portée au-dessus du réservoir 6, sur cet étage supérieur de lanceur.

Pour un gain de masse et d'encombrement, la tuyère 4 revêt un caractère déployable. Elle est constituée par trois tronçons 8a, 8b, 8c, déplaçables les uns par rapport aux autres selon la direction axiale 9 de cette tuyère, correspondant à la direction verticale. Chacun de ces tronçons adopte une forme globalement tronconique, de manière à former conjointement un divergent.

Sur les figures 1 et 1a, la tuyère est représentée en configuration de lancement, tandis que sur la figure 2, la tuyère est en configuration déployée de propulsion. Ces deux configurations, qui seront détaillées ci-après, sont respectivement adoptées sur le pas de tir avant le lancement, et durant la mission après la séparation entre l'étage supérieur et l'étage principal du lanceur.

Dans la configuration de lancement montrée sur les figures 1 et 1a, le premier tronçon de tuyère 8a est fixé sur l'extrémité basse du corps de moteur 2. Cette fixation est d'ailleurs conservée quelle que soit la configuration adoptée par la tuyère. Le premier tronçon 8a se projette donc vers le bas à partir du corps de moteur 2.

En revanche, le second tronçon 8b et le troisième tronçon 8c adoptent une position relevée permettant de diminuer la longueur axiale de la tuyère 4. Plus précisément, le second tronçon 8b est relevé de telle façon que son extrémité inférieure se situe approximativement au niveau de l'extrémité supérieure du premier tronçon 8a. Il est porté par une structure 10 permettant son déplacement axial. Cette structure 10, connue de l'homme du métier, est fixée au premier tronçon 8a ainsi qu'au réservoir 6 et/ou au corps du moteur 2, par l'intermédiaire de poutrelles supportant une crémaillère verticale 12 le long de laquelle le second tronçon 8b est commandé à coulissement, électriquement.

Le troisième tronçon 8c est également maintenu en position relevée, en étant porté par le second tronçon 8b. Plus précisément, ces deux tronçons se situent dans le prolongement l'un de l'autre, en adoptant une position relative identique à celle adoptée en configuration déployée de propulsion. Une liaison mécanique réversible connue de l'homme du métier est prévue entre l'extrémité supérieure du troisième tronçon 8c et l'extrémité inférieure du second tronçon 8b, par exemple du type à encliquetage.

Dans cette configuration de lancement adoptée sur le pas de tir, l'extrémité inférieure du troisième tronçon 8c se situe approximativement au niveau de l'extrémité inférieure du premier tronçon 8a.

En étant relevé, le second tronçon 8b enveloppe une grande partie du corps de moteur 2. En revanche, en configuration déployée de propulsion montrée sur la figure 2, les tronçons 8b et 8c sont abaissés de façon à se situer dans la continuité de l'extrémité inférieure du premier tronçon 8a, afin de former une tuyère tronconique, également dénommée divergent, de longueur maximale. Cet abaissement s'effectue électriquement à l'aide de la crémaillère 12, toujours avec le troisième tronçon 8c encliqueté sur le second tronçon 8b.

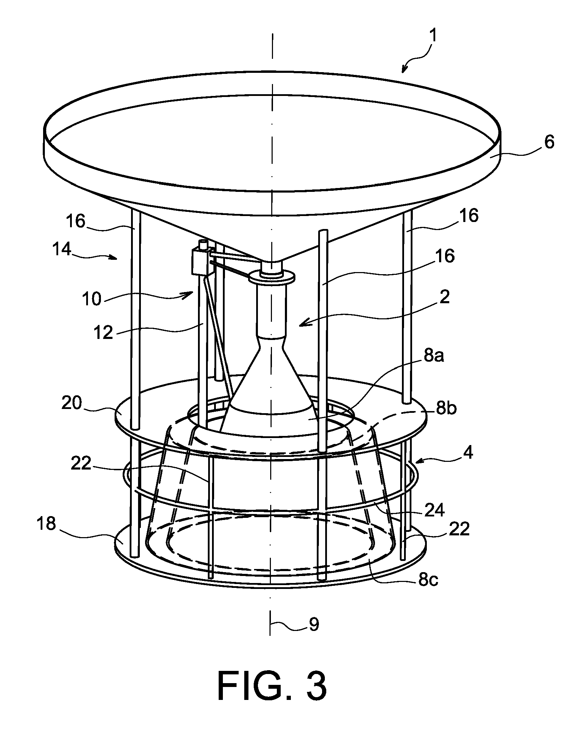

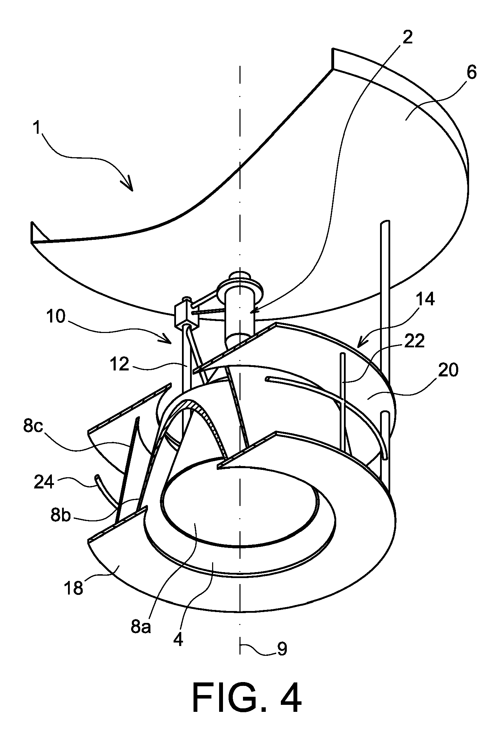

Sur les figures 3 et 4, il est montré l'une des particularités de l'invention, consistant à prévoir une structure de support temporaire de tronçons pour pourvoir amener la tuyère 4 dans une troisième configuration, dite configuration d'accès au corps du moteur.

La structure de support temporaire 14 comprend une pluralité de tirants verticaux 16, par exemple quatre, dont l'extrémité supérieure est fixée sur le fond du réservoir 6. Ces tirants, disposés autour du corps de moteur 2 et des tronçons de tuyère 8a, 8b, 8c, présentent également une extrémité inférieure portant fixement un support inférieur 18 en forme de couronne. Cette couronne 18, d'axe 9, est prévue pour porter le troisième tronçon 8c, en supportant son extrémité inférieure. Un contact est préférentiellement prévu entre toute la circonférence de cette extrémité inférieure de tronçon 8c et la couronne 18. Ainsi, l'intégralité de la masse de ce troisième tronçon 8c est reprise par la couronne 18.

Il peut d'ailleurs en être de même pour le second tronçon 8b, comme cela a été représenté sur les figures 3 et 4. Dans ce cas, même si ce tronçon continue à être lié mécaniquement à la crémaillère 12, sa masse est reprise intégralement ou presque par la couronne 18.

Dans cette configuration particulière, les tronçons pénètrent les uns dans les autres. Plus précisément, le premier tronçon 8a pénètre au moins partiellement dans le second tronçon 8b, tandis que ce dernier pénètre au moins partiellement dans le troisième tronçon 8c. Pour une compacité encore plus grande, comme cela a été représenté, les trois tronçons sont insérés les uns dans les autres en se recouvrant entièrement, à savoir que leurs extrémités supérieures se situent sensiblement à un même premier niveau, et que leurs extrémités inférieures se situent elles aussi sensiblement à un même second niveau. De ce fait, dans la configuration spécifique à la présente invention, la longueur réduite de la tuyère correspond à une longueur d'un seul de ses trois tronçons. Comme cela ressort de ce qui précède, les trois tronçons 8a, 8b, 8c présentent sensiblement la même longueur selon l'axe 9, ce qui permet une compacité maximale lorsqu'ils sont insérés les uns dans les autres, comme montré sur les figures 3 et 4.

La structure de maintien temporaire 14 comporte également un support supérieur 20 porté par les tirants 16 qui la traversent, ce support prenant une forme identique à celle de la couronne inférieure 18. Cette couronne recouvre les extrémités supérieures des second et troisième tronçons 8b, 8c, un contact pouvant même être prévu pour renforcer le maintien mécanique de ces tronçons. Une armature de liaison entre les deux couronnes 18, 20 peut également être prévue, par exemple sous forme de plus petits tirants verticaux 22 reliant les deux couronnes, et d'un anneau 24 raccordant entre eux ces mêmes tirants 22 ainsi que les tirants 16 de plus grande longueur.

Bien que cela n'ait pas été représenté, un escalier d'accès et/ou un compartiment de stockage d'outils peut être intégré à cette structure 14, sur laquelle des opérateurs peuvent marcher et/ou se sécuriser pour réaliser des opérations sur le corps du moteur 2, dont l'accès latéral à été entièrement libéré par l'abaissement des tronçons 8b, 8c.

En effet, dans cette configuration, l'intégralité du corps de moteur 2 est accessible aux opérateurs désirant effectuer des interventions nominales ou non-nominales sur le pas de tir, puisque tous les tronçons 8a, 8b, 8c sont situés en dessous de ce corps 2.

Cette configuration peut être adoptée en sortie de fabrication de l'étage supérieur 1, et conservée durant son transport sur le pas de tir. Ainsi, les tronçons 8a, 8b, 8c peuvent être maintenus mécaniquement de façon très satisfaisante par un ou plusieurs éléments de la structure de support temporaire, ce qui limite leur risque d'endommagement.

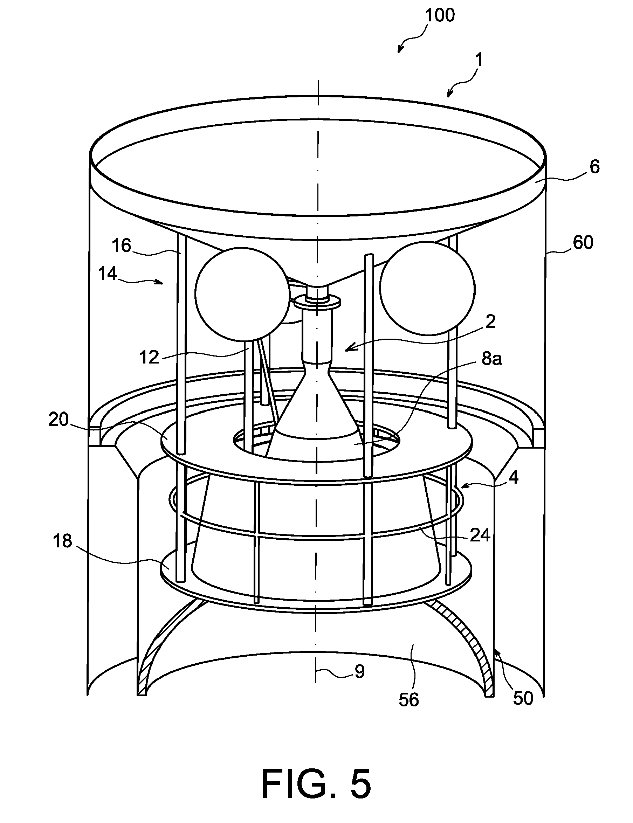

Ensuite, toujours en conservant cette configuration, l'étage supérieur 1 est monté sur le pas de tir au-dessus d'un étage principal 50 du lanceur 100, montré en partie sur la figure 5. Le support inférieur 18 se situe alors en butée ou légèrement au-dessus d'un réservoir 56 de cet étage principal 50, avec le corps de moteur 2 découvert par les tronçons.

Pendant toute la période qui précède le tir, des opérations peuvent ainsi être effectuées sur le corps de moteur 2, facilement accessible à des opérateurs circulant sur la structure temporaire 14. Ce n'est qu'avant la fermeture de l'espace inter-étage par une jupe 60, montrée sur la figure 5, que la tuyère déployable 4 est amenée dans sa configuration de lancement représentée sur les figures 1 et 1a. Pour ce faire, il est de préférence d'abord procédé au déplacement du tronçon 8b par la crémaillère, jusqu'à son encliquetage avec le tronçon 8c, puis il est ensuite procédé au retrait de la structure de support temporaire 14. La jupe 60 peut alors être installée.

Il est noté que préférentiellement, l'ensemble de la structure comprend un niveau de démontabilité suffisant pour qu'un opérateur puisse accéder par la trappe d'accès de l'inter-étage, qui est de faible taille.

Bien entendu, diverses modifications peuvent être apportées par l'homme du métier à l'invention qui vient d'être décrite, uniquement à titre d'exemples non limitatifs.

## Revendications

1. Etage (1) de lanceur spatial (100) comprenant une tuyère déployable (4) et, en position verticale, un corps de moteur (2), un réservoir (6) fixé au-dessus du corps de moteur ainsi qu'un premier tronçon de la tuyère déployable (8a) fixé au-dessous du corps de moteur, ladite tuyère déployable (4) comprenant également un second tronçon (8b) porté par une structure (10) permettant son déploiement, ainsi qu'un troisième tronçon (8c), lesdits premier, second et troisième tronçons de tuyère étant destinés à se situer dans le prolongement les uns des autres lorsque la tuyère se trouve en configuration déployée de propulsion, avec le second tronçon (8b) se situant dans le prolongement du premier tronçon (8a), et le troisième tronçon (8c) se situant dans le prolongement du second tronçon (8b) qui le porte, ledit étage (1) comportant en outre une structure de support temporaire de tronçon de tuyère (14) permettant d'amener la tuyère (4) dans une configuration d'accès au corps du moteur dans laquelle le premier tronçon (8a) pénètre au moins partiellement dans le second tronçon (8b), et dans laquelle le second tronçon (8b) pénètre au moins partiellement dans le troisième tronçon (8c), **caractérisé en ce que** la structure de support temporaire est montée sur ledit réservoir (6), et **en ce que** l'extrémité inférieure du troisième tronçon est en appui contre un support inférieur (18) de ladite structure de support temporaire (14).

2. Etage selon la revendication 1, **caractérisé en ce que** dans ladite configuration d'accès au corps du moteur, l'extrémité inférieure dudit second tronçon de tuyère (8b) est également en appui contre ledit support inférieur (18) de la structure de support temporaire (14).

3. Etage selon la revendication 1 ou la revendication 2, **caractérisé en ce que** dans ladite configuration d'accès au corps du moteur, l'extrémité supérieure de chacun des second et troisième tronçons de tuyère (8b, 8c) se situe au niveau ou au-dessous de l'extrémité supérieure du premier tronçon (8a) raccordée au corps de moteur.

4. Etage selon l'une quelconque des revendications précédentes, **caractérisé en ce que** ladite structure de support temporaire (14) comporte des tirants (16) reliant le support inférieur (18) au réservoir (6).

5. Etage selon l'une quelconque des revendications précédentes, **caractérisé en ce que** ledit support inférieur (18) prend la forme d'une couronne.

6. Etage selon l'une quelconque des revendications précédentes, **caractérisé en ce que** ladite structure de support temporaire (14) comporte également un support supérieur (20) situé au-dessus de l'extrémité supérieure de chacun des second et troisième tronçons (8b, 8c) de la tuyère en configuration d'accès au corps du moteur.

7. Etage selon la revendication 6, **caractérisé en ce que** ladite structure de support temporaire (14) comporte également une armature de liaison (22, 24) entre les supports supérieur et inférieur (20, 18), cette armature étant disposée autour du troisième tronçon (8c).

8. Etage selon l'une quelconque des revendications précédentes, **caractérisé en ce que** ladite structure de support temporaire (14) comporte également au moins un élément parmi un escalier d'accès et un compartiment de stockage d'outils.

9. Lanceur spatial (100) comprenant au moins un étage (1) selon l'une quelconque des revendications précédentes.

10. Procédé de fabrication d'un lanceur spatial (100) comprenant un étage principal (50) ainsi qu'un étage supérieur (1) selon l'une quelconque des revendications 1 à 8, ledit procédé comprenant les étapes suivantes :
- réalisation de l'étage supérieur (1), en amenant la tuyère (4) dans la configuration d'accès au corps du moteur ;
- transport dudit étage supérieur (1) sur un pas de tir, avec la tuyère en configuration d'accès au corps du moteur ; et
- sur le pas de tir, montage de l'étage supérieur (1) sur l'étage principal (50), avec la tuyère (4) en configuration d'accès au corps du moteur.

11. Procédé de fabrication d'un lanceur selon la revendication 10, dans lequel il est ensuite réalisé, avant le lancement :
- la mise en place de la tuyère (4) dans une configuration de lancement dans laquelle le second tronçon (8b) est disposé autour du corps de moteur (2), et porte à son extrémité basse ledit troisième tronçon (8c) ; puis
- le retrait de la structure de support temporaire (14).

## Patentansprüche

1. Stufe (1) einer Trägerrakete (100) mit einer ausfahrbaren Düse (4) und, in senkrechter Position,
einem Motorkörper (2), einem oberhalb des Motorkörpers befestigten Behälter (6) sowie einem ersten Abschnitt der ausfahrbaren Düse (8a), der unterhalb des Motorkörpers befestigt ist, wobei die ausfahrbare Düse (4) auch einen zweiten Abschnitt (8b), der von einer Struktur (10) getragen wird, welche seine Entfaltung ermöglicht, sowie einen dritten Abschnitt (8c) umfasst, wobei der erste, zweite und dritte Abschnitt der Düse dazu vorgesehen sind, in der gegenseitigen Verlängerung zueinander zu stehen, wenn sich die Düse in der ausgefahrenen Antriebskonfiguration befindet, wobei der zweite Abschnitt (8b) in der Verlängerung des ersten Abschnittes (8a) liegt und der dritte Abschnitt (8c) in der Verlängerung des zweiten Abschnittes (8b) liegt, der ihn trägt,
wobei die Stufe (1) außerdem eine temporäre Stützstruktur eines Düsenabschnittes (14) aufweist, welche die Zuführung der Düse (4) in einer Zugriffskonfiguration auf den Motorkörper ermöglicht, in der der erste Abschnitt (8a) zumindest teilweise in den zweiten Abschnitt (8b) eindringt, und in der der zweite Abschnitt (8b) zumindest teilweise in den dritten Abschnitt (8c) eindringt, **dadurch gekennzeichnet, dass** die temporäre Stützstruktur auf dem Behälter (6) angebracht ist und dass sich das untere Ende des dritten Abschnittes an einem unteren Träger (18) dieser temporären Stützstruktur (14) abstützt.

2. Stufe gemäß Anspruch 1, **dadurch gekennzeichnet, dass** sich in dieser Zugriffskonfiguration auf den Motorkörper das untere Ende dieses zweiten Abschnittes der Düse (8b) ebenfalls an diesem unteren Träger (18) der temporären Stützstruktur (14) abstützt.

3. Stufe gemäß Anspruch 1 oder Anspruch 2, **dadurch gekennzeichnet, dass** in dieser Zugriffskonfiguration auf den Motorkörper jeweils das obere Ende des zweiten und dritten Abschnittes der Düse (8b, 8c) auf gleicher Höhe mit oder unter dem mit dem Motorkörper verbundenen, oberen Ende des ersten Abschnittes (8a) liegt.

4. Stufe gemäß einem der vorhergehenden Ansprüche, **dadurch gekennzeichnet, dass** die temporäre Stützstruktur (14) Streben (16) umfasst, die den unteren Träger (18) mit dem Behälter (6) verbinden.

5. Stufe gemäß einem der vorhergehenden Ansprüche, **dadurch gekennzeichnet, dass** der untere Träger (18) die Form eines Kranzes aufweist.

6. Stufe gemäß einem der vorhergehenden Ansprüche, **dadurch gekennzeichnet, dass** die temporäre Stützstruktur (14) außerdem einen oberen Träger (20) umfasst, der über dem jeweiligen oberen Ende des zweiten und dritten Abschnittes (8b, 8c) der Düse in der Zugriffskonfiguration auf den Motorkörper liegt.

7. Stufe gemäß Anspruch 6, **dadurch gekennzeichnet, dass** die temporäre Stützstruktur (14) auch einen Verbindungsanker (22, 24) zwischen dem oberen und unteren Träger (20, 18) aufweist, wobei dieser Anker um den dritten Abschnitt (8c) herum angeordnet ist.

8. Stufe gemäß einem der vorhergehenden Ansprüche, **dadurch gekennzeichnet, dass** die temporäre Stützstruktur (14) außerdem mindestens ein Element aus einer Zugangstreppe und einer Kammer zur Werkzeuglagerung aufweist.

9. Trägerrakete (100) mit mindestens einer Stufe (1) gemäß einem der vorhergehenden Ansprüche.

10. Herstellungsverfahren einer Trägerrakete (100) mit einer Hauptstufe (50) sowie einer oberen Stufe (1) gemäß einem der Ansprüche 1 bis 8, wobei das Verfahren die folgenden Schritte umfasst:
- Ausführung der oberen Stufe (1), indem die Düse (4) in der Zugriffskonfiguration auf den Motorkörper zugeführt wird;
- Transport dieser oberen Stufe (1) zu einer Startrampe, wobei die Düse in der Zugriffskonfiguration auf den Motorkörper vorliegt; und
- auf der Startrampe Montage der oberen Stufe (1) auf der Hauptstufe (50), wobei die Düse (4) in der Zugriffskonfiguration auf den Motorkörper vorliegt.

11. Verfahren zur Herstellung einer Trägerrakete gemäß Anspruch 10, bei dem anschließend vor dem Start die folgenden Schritte durchgeführt werden:
- das Einsetzen der Düse (4) in einer Startkonfiguration, in der der zweite Abschnitt (8b) um den Motorkörper (2) herum angeordnet ist und an seinem unteren Ende den dritten Abschnitt (8c) trägt; danach
- das Zurückziehen der temporären Stützstruktur (14).

## Claims

1. Stage (1) of a space launcher (100) comprising a deployable nozzle(4) and, in the upright position, an engine core (2), a tank (6) secured above the engine core and a first section of the deployable nozzle (8a) secured below the engine core, said deployable nozzle (4) also comprising a second section (8b) borne by a structure (10) enabling the deployment thereof, along with a third section (8c), said first, second and third nozzle sections being intended to be situated extending from each other when the nozzle is in the deployed propulsion configuration, with the second section (8b) being situated extending from the first section (8a), and the third section (8c) being situated extending from the second section (8b) bearing same,
said stage (1) further comprises a structure for temporarily supporting nozzle sections (14) suitable for changing the nozzle (4) to a configuration for accessing the engine core wherein the first section (8a) at least partially enters the second section (8b), and wherein the second section (8b) at least partially enters the third section (8c), **characterised in that** the structure for temporarily supporting is mounted on said tank (6), and **in that** the lower end of third section bears against a lower support (18) of said temporary support structure (14).

2. Stage according to claim 1, **characterised in that**, in said configuration for accessing the engine core, the lower end of said second nozzle section (8b) also bears against said lower support (18) of the temperature support structure (14).

3. Stage according to claim 1 or claim 2, **characterised in that**, in said configuration for accessing the engine core, the upper end of each of the second and third nozzle sections (8b, 8c) is situated on a level with or below the upper end of the first section (8a) connected to the engine core.

4. Stage according to any of the above claims, **characterised in that** said temporary support structure (14) comprises rods (16) connecting the lower support (18) to the tank (6).

5. Stage according to any of the above claims, **characterised in that** said lower support (18) adopts the shape of a ring.

6. Stage according to any of the above claims, **characterised in that** said temporary support structure (14) also comprises an upper support (20) situated above the upper end of each of the second and third nozzle sections (8b, 8c) in the configuration for accessing the engine core.

7. Stage according to claim 6, **characterised in that** said temporary support structure (14) also comprises a connection frame (22, 24) between the upper and lower supports (20, 18), this frame being arranged around the third section (8c).

8. Stage according to any of the above claims, **characterised in that** said temporary support structure (14) also comprises at least one element from access steps and a tool storage compartment.

9. Space launcher (100) comprising at least one stage (1) according to any of the above claims.

10. Method for manufacturing a space launcher (100) comprising a main stage (50) and an upper stage (1) according to any of claims 1 to 8, said method comprising the following steps:
- producing the upper stage (1), by changing the nozzle (4) to the configuration for accessing the engine core;
- transporting said upper stage (1) to a launch pad, with the nozzle in the configuration for accessing the engine core; and
- on the launch pad, mounting the upper stage (1) onto the main stage (50), with the nozzle (4) in the configuration for accessing the engine core.

11. Method for manufacturing a launcher according to claim 10, wherein the following steps, prior to the launch, are then carried out:
- placing the nozzle (4) in a launch configuration wherein the second section (8b) is arranged around the engine core (2), and bears at the lower end thereof said third section (8c); and
- removing the temporary support structure (14).
